# FASCICULE DE BREVET EUROPEEN

(11) **EP 1 246 333 B1**
(45) Date de publication et mention de la délivrance du brevet: **12.03.2014**
(21) Numéro de dépôt: 02290702.6
(22) Date de dépôt: 20.03.2002
(51) Int. Cl.: H02G 3/04

(54) **Embout de goulotte**
Endstück für einen Führungskanal
End piece for wiring duct

(30) Priorité: 30.03.2001 FR 0104419
(43) Date de publication de la demande: 02.10.2002
(73) Titulaire: LEGRAND, 87000 Limoges (FR); Legrand SNC, 87000 Limoges (FR)
(72) Inventeur: Gautier, Bruno, 72140 Sille le Guillaume (FR)
(74) Mandataire: Santarelli

(56) Documents cités:
- EP-A- 0 409 807
- EP-A- 0 736 941

## Description

La présente invention concerne d'une manière générale les embouts pour goulottes du type de celles mises en oeuvre, par exemple pour le support, le logement et la protection de divers appareillages, et en particulier de divers appareillages électriques aussi bien que pour le support, le logement et la protection des conducteurs, câbles ou canalisations nécessaires à la desserte de ces appareillages.

Elle concerne plus particulièrement un embout de goulotte comprenant une joue destinée à obturer une extrémité ouverte d'un socle de goulotte, pourvue de moyens de fixation sur ladite extrémité, et un cache pour fermer un espace ouvert situé entre ladite joue et un bord d'extrémité d'un couvercle de fermeture dudit socle.

Un tel embout de goulotte est déjà connu notamment du document EP 0 409 807.

Toutefois, l'inconvénient principal d'un tel embout est que le cache est une pièce indépendante de la joue et de ce fait peut être perdu avant son montage sur le socle de goulotte.

On connaît également du document EP 0 630 090 un dispositif de raccordement de socles de goulotte qui comporte une partie de transition et un cache à rapporter sur ladite partie de transition et lié à celle-ci par une charnière s'étendant à partir d'un bord d'extrémité de ladite partie de transition.

Toutefois, une telle charnière est difficile à mettre en oeuvre sans nuire à l'esthétique de l'ensemble car la charnière apparaît inévitablement en saillie du dispositif de raccordement et est visible depuis l'extérieur une fois que ce dispositif de raccordement est mis en place à la jonction des socles de goulotte, lesdits socles étant fermés par leur couvercle de fermeture.

Afin de résoudre les inconvénients précités, la présente invention propose un nouvel embout de goulotte tel que défini en introduction, caractérisé en ce qu'il comporte un bras flexible s'étendant entre les faces intérieures du cache et de la joue pour établir un lien permanent entre ces derniers.

D'autres caractéristiques non limitatives et avantageuses de l'embout de goulotte conforme à l'invention sont les suivantes :
- le bras flexible vient de formation par moulage d'une matière plastique avec la joue et le cache ;
- la joue comporte des moyens de butée du bord d'extrémité du couvercle de fermeture formant un repère pour ajuster la coupe et le positionnement dudit bord d'extrémité du couvercle de fermeture par rapport à la joue ;
- les moyens de fixation de la joue sur ladite extrémité du socle sont des moyens de fixation par vissage ;
- les moyens de fixation de la joue sur ladite extrémité du socle sont des moyens de fixation par encliquetage ;
- lesdits moyens de fixation comprennent deux platines, percées chacune d'un orifice traversant, portées par ladite joue et destinées, lors de la mise en place de ladite joue sur l'extrémité ouverte dudit socle, à se positionner chacune sur un retour d'une aile latérale dudit socle de manière que ledit orifice traversant débouche dans une rainure formée à l'extrémité dudit retour, ledit orifice traversant étant destiné à accueillir une vis apte à venir en prise par vissage avec les parois de ladite rainure ;
- chaque platine présente un profil en escalier avec une plate-forme inférieure comprenant l'orifice traversant et une plate-forme supérieure dont la tranche forme des moyens de butée du bord d'extrémité du couvercle de fermeture ;
- la joue comporte, sur ses bords d'extrémités latéraux, des retours latéraux destinés à s'appliquer sur les ailes latérales du socle de goulotte, chaque platine étant solidaire d'un retour latéral et ladite joue porte, en regard de chaque retour latéral, une paroi, l'écartement prévu entre chaque paroi et chaque retour latéral correspondant à la largeur de chaque retour de chaque aile latérale du socle de goulotte de sorte que, lorsque la joue est mise en place sur ladite extrémité dudit socle, chaque retour de chaque aile latérale dudit socle est légèrement pincé entre un retour latéral et une paroi de ladite joue qui forment un moyen de retenue temporaire de ladite joue sur ledit socle ;
- la joue porte au moins un plot percé d'un orifice destiné à recevoir un plot porté par le cache ;
- la joue porte, sur sa face intérieure, au moins une lamelle s'étendant dans un plan perpendiculaire au plan de ladite joue de sorte que la tranche de ladite lamelle sert d'appui au couvercle de fermeture ;
- la joue comporte, sur son bord supérieur longitudinal, un retour formant un support pour le cache ;
- le cache comprend des moyens de montage par encliquetage sur les retours des ailes latérales du socle de goulotte ;
- lesdits moyens de montage comprennent deux pattes pourvues à leur extrémité libre d'une dent, chaque dent étant apte à s'encliqueter sous un desdits retours ;
- chaque retour d'aile latérale comprenant à son extrémité libre une nervure longitudinale dirigée vers l'intérieur du socle de goulotte, chaque dent de chaque patte portée par le cache est apte à s'accrocher sur une partie d'extrémité libre de cette nervure longitudinale ; et
- le cache comprend des moyens de montage sur la joue.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de l'embout selon l'invention prêt à être mis en place sur un socle de goulotte ;
- la figure 2 est une vue schématique en perspective de l'embout de la figure 1 positionné à l'extrémité ouverte d'un socle de goulotte ;
- la figure 3 est une vue schématique en perspective de l'embout de la figure 1 mis en place sur l'extrémité ouverte d'un socle de goulotte fermé par un couvercle de fermeture, le cache de l'embout n'étant pas rapporté sur ledit socle ;
- la figure 4 est une vue en perspective du socle de goulotte représenté sur la figure 3 fermé par son couvercle de fermeture et comportant l'embout selon l'invention en position de fermeture ; et
- la figure 5 est une vue partielle en coupe selon le plan A-A de la figure 4.

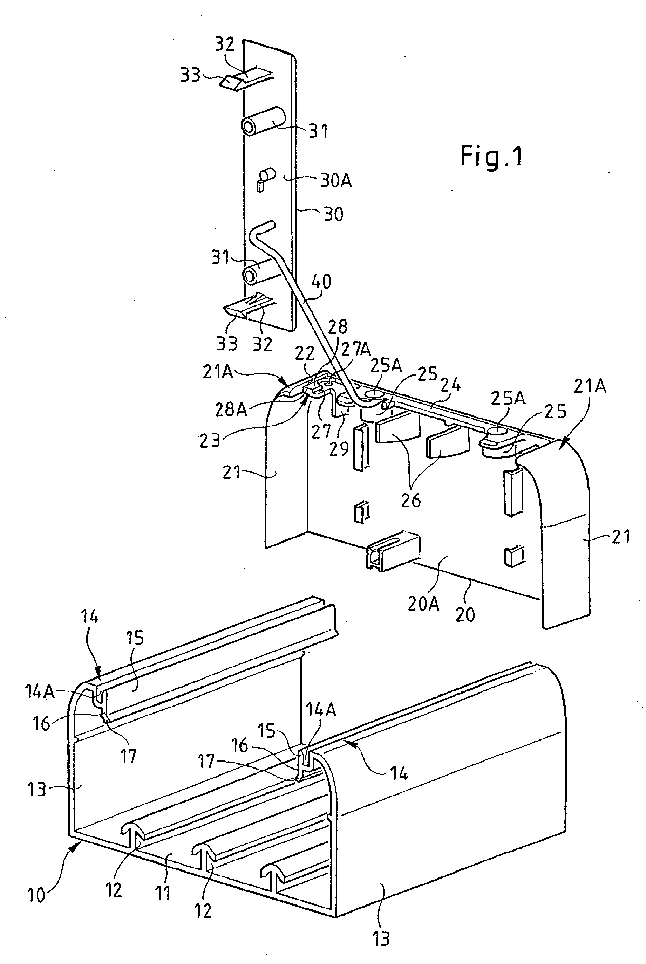

Sur les figures 1 à 5, on a représenté un embout de goulotte destiné à être rapporté sur l'extrémité ouverte d'un socle 10 de goulotte.

De manière connue en soi, le socle 10 comporte ici une section en U avec un fond 11 portant des nervures longitudinales 12 pour le montage éventuel de cloisons de fractionnement de l'espace intérieur dudit socle, et deux ailes latérales 13. Chacune des ailes latérales 13 comporte sur son extrémité libre un retour 14, lesdits retours 14 étant dirigés l'un vers l'autre.

Chaque retour 14 d'une aile latérale 13 du socle 10 forme, à son extrémité libre, une rainure 14A orientée vers l'extérieur du socle 10 et bordant longitudinalement l'ouverture longitudinale du socle 10, la paroi intérieure 15 de chaque rainure 14A formant une bande de clipsage pour le montage d'un couvercle de fermeture 50.

A cet effet, ladite paroi intérieure 15 de chaque rainure 14A se prolonge en dessous de cette dernière pour former une nervure 16 faisant saillie longitudinalement vers l'intérieur du socle 10 de goulotte.

Cette nervure 16 comporte une partie d'extrémité libre 17 sur laquelle est destinée à s'accrocher une dent d'encliquetage ou de clipsage 52 prévue à l'extrémité libre d'une patte d'encliquetage ou de clipsage 51 portée par la face interne du couvercle de fermeture 50 du socle 10 de goulotte.

Plus particulièrement, le couvercle de fermeture 50 comporte, à proximité de chaque bord d'extrémité longitudinal 53, une patte d'encliquetage ou de clipsage 51 s'étendant sur toute la longueur dudit couvercle de fermeture 50.

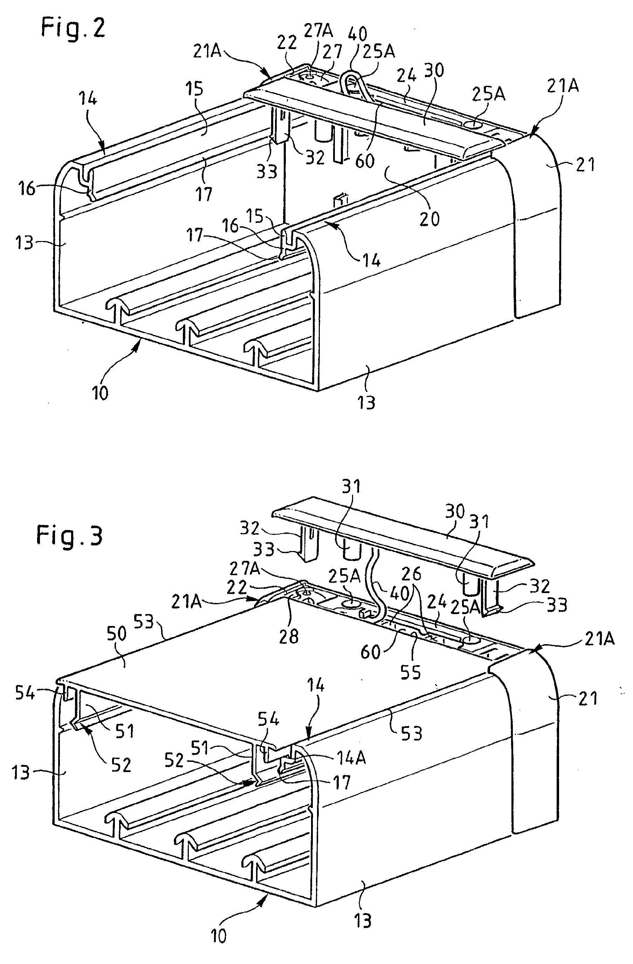

La partie d'extrémité libre 17 de chaque nervure 16 s'étend en oblique par rapport à ladite nervure 16 de façon à former une rampe d'encliquetage de la dent d'encliquetage 52 de la patte d'encliquetage 51 correspondante du couvercle de fermeture 50 (voir figure 3).

En outre, comme le montre plus particulièrement la figure 3, le couvercle de fermeture 50 porte, à proximité de chacun de ses bords d'extrémité longitudinaux 53, une languette longitudinale 54 destinée à s'engager dans une des rainures 14A formées à l'extrémité libre desdits retours 14 des ailes latérales 13 du socle 10 de goulotte.

Lors du montage du couvercle de fermeture 50 sur le socle 10 de goulotte, chaque paroi intérieure 15 de chaque rainure 14A de chaque retour 14 de chaque aile latérale 13 du socle 10 de goulotte, est prise en sandwich entre une languette longitudinale 54 et une patte d'encliquetage 51 du couvercle de fermeture 50.

L'embout de goulotte, selon l'invention, représenté sur les figures 1 à 5, comprend une joue 20 destinée à fermer une extrémité ouverte du socle 10 de goulotte, pourvue de moyens de fixation sur ladite extrémité, et un cache 30 pour fermer un espace ouvert 60 (voir figure 3) situé entre la joue 20 et un bord d'extrémité 55 du couvercle de fermeture 50 rapporté sur le socle 10 de goulotte.

Selon une caractéristique particulièrement avantageuse de l'embout de goulotte représenté, il comporte un bras flexible 40 s'étendant entre les faces intérieures 30A, 20A du cache 30 et de la joue 20 pour établir un lien permanent entre ces derniers.

Plus particulièrement, une extrémité de ce bras flexible 40 est solidaire de la face intérieure 30A du cache 30, et l'autre extrémité du bras flexible 40 est solidaire de la face intérieure 20A de la joue 20.

Avantageusement, le bras flexible 40 vient de formation par moulage d'une matière plastique avec la joue 20 et le cache 30.

Ainsi, le cache 30 de l'embout est en permanence rattaché à la joue 20 et ne risque pas d'être perdu par l'installateur avant que l'embout soit mis en place sur l'extrémité ouverte du socle 10 de goulotte.

Lors de la mise en place du cache 30 sur le socle 10 de goulotte, le bras flexible 40 se replie pour s'effacer sous ledit cache 30 en s'engageant à l'intérieur du socle 10 de goulotte.

Par ailleurs, les moyens de fixation de la joue 20 sur ladite extrémité ouverte du socle 10 de goulotte sont ici des moyens de fixation par vissage.

Plus particulièrement, ces moyens de fixation comprennent deux platines 23 percées chacune d'un orifice traversant 27A, solidaires de la face intérieure 20A de la joue 20 et destinées, lors de la mise en place de ladite joue 20 sur l'extrémité ouverte dudit socle 10, à se positionner chacune sur un retour 14 d'une aile latérale 13 du socle 10 de manière que chaque orifice traversant 27A débouche dans une rainure 14A formée à l'extrémité dudit retour 14 (voir figures 2 et 3).

Chaque orifice traversant 27A est destiné à accueillir une vis, ici une vis auto-taraudeuse, apte à venir en prise par vissage avec les parois de la rainure 14A correspondante.

Chaque platine 23 présente un profil en escalier avec une plate-forme inférieure 27 comprenant l'orifice traversant 27A et une plate-forme supérieure 28 dont la tranche 28A forme des moyens de butée du bord d'extrémité 55 du couvercle de fermeture 50 et constituant par là même un repère pour ajuster la coupe et le positionnement dudit bord d'extrémité 55 du couvercle de fermeture 50 par rapport à la joue 20 de manière à laisser un espace ouvert 60 suffisant pour autoriser la mise en place du cache 30 sur le socle 10 de goulotte, de sorte que, à coup sûr, ledit cache 30 recouvre convenablement le bord d'extrémité 55 coupé dudit couvercle de fermeture 50.

Selon l'exemple représenté sur les figures, la joue 20 comporte, sur ses bords d'extrémité latéraux, des retours latéraux 21 présentant chacun un profil courbe identique ou similaire au profil courbe des ailes latérales 13 du socle 10, et destinés à s'appliquer sur lesdites ailes latérales 13 du socle 10 de goulotte, les platines 23 prévues pour la fixation de la joue 20 étant solidaires desdits retours latéraux 21.

Les retours latéraux 21 de la joue 20 présentent chacun une partie d'extrémité supérieure 21A destinée à recouvrir une partie plane d'un retour 14 d'une aile latérale 13 dudit socle 10.

La joue 20 porte, en outre, en regard de chacun des ses retours latéraux 21, une paroi 29. Ici, chaque paroi 29 constitue une paroi tombante de la plate-forme inférieure 27 de chaque platine 23 prévue pour la fixation de la joue 20. Chaque paroi 29 est positionnée en regard de chaque retour latéral 21 de la joue 20 de telle sorte que l'écartement, prévu entre chaque paroi 29 et chaque retour latéral 21, correspond à la largeur de chaque retour 14 de chaque aile latérale 13 du socle 10 de goulotte.

Ainsi, avantageusement, lorsque la joue 20 de l'embout selon l'invention est mise en place sur l'extrémité ouverte dudit socle 10, chaque retour 14 de chaque aile latérale 13 est légèrement pincé entre un retour latéral 21 et une paroi 29 de ladite joue 20.

Par ce léger pincement, la joue 20 est alors retenue temporairement sur le socle 10 avant qu'intervienne sa fixation définitive par vissage.

En outre, la joue 20 porte, sur sa face intérieure 20A, deux lamelles 26 qui s'étendent dans un plan perpendiculaire au plan de la joue 20 de sorte que la tranche de chaque lamelle 26 sert d'appui au couvercle de fermeture 50. Cela permet de renforcer au niveau de l'embout le montage du couvercle de fermeture 50 sur le socle 10 de goulotte, et d'éviter son enfoncement éventuel lorsqu'une pression est exercée sur celui-ci après son montage.

Comme le montre plus particulièrement la figure 1, la joue 20 comporte, sur son bord supérieur longitudinal, un retour 24 formant un support pour le cache 30.

En outre, cette joue 20 porte deux plots 25 percés d'un orifice 25A, ici un orifice traversant, et destinés à recevoir chacun un plot 31 porté par le cache 30. L'engagement de chaque plot 31 du cache 30 dans les orifices 25A des plots 25 portés par la joue 20 permet de centrer le cache 30 dans le sens de la longueur par rapport à la joue 20.

Par ailleurs, selon l'exemple représenté, le cache 30 comporte des moyens de montage 32, 33 par encliquetage sur les retours 14 des ailes latérales 13 du socle 10 de goulotte.

Ces moyens de montage comprennent deux pattes 32 pourvues à leur extrémité libre d'une dent 33, chaque dent 33 étant apte à s'encliqueter sous un desdits retours 14.

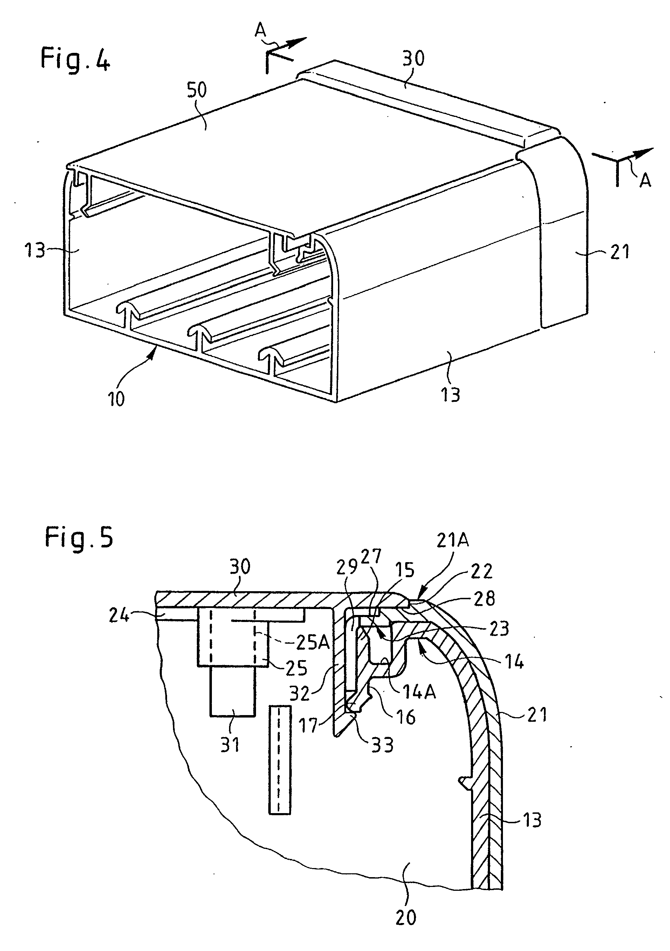

Plus particulièrement, chaque dent 33 de chaque patte 32 portée par le cache 30 est apte à s'accrocher sur la partie d'extrémité libre 17 en oblique de chaque nervure 16 portée par chaque retour 14 (voir figure 5).

Comme le montre plus particulièrement la figure 3, pour obturer l'extrémité ouverte du socle 10 de goulotte, l'installateur met en place la joue 20 de l'embout sur ladite extrémité ouverte de sorte que ses retours latéraux 21 recouvrent les ailes latérales 13 du socle 10 en s'appliquant sur celles-ci de telle manière que les parties d'extrémité supérieures 21A de ces retours latéraux 21 de la joue 20 recouvrent les parties planes des retours 14 des ailes latérales 13 du socle 10 pour assurer une continuité esthétique.

Puis, l'installateur met en place le couvercle de fermeture 50 sur le socle 10 en l'encliquetant sur les extrémités libres 17 en oblique des nervures 16 portées par les retours 14, et en le positionnant en butée contre les plates-formes supérieures 28 des platines 23 portées par la joue 20.

Ainsi positionné, comme le montre plus particulièrement la figure 3, le couvercle de fermeture 50 laisse subsister un espace ouvert 60 entre son bord d'extrémité 55 coupé et la joue 20, cet espace ouvert 60 étant juste suffisant pour mettre en place par encliquetage le cache 30 sur le socle 10.

Lors de la mise en place du cache 30 sur ledit socle 10, le bras flexible 40 se replie pour s'effacer sous ledit cache en rentrant à l'intérieur dudit socle 10.

Dans sa position montée, comme le montre plus particulièrement la figure 5, le cache 30 repose, par ses extrémités, sur les plates-formes supérieures 28 des platines 23 de la joue 20, en étant calé entre les bords d'extrémité 22 des parties d'extrémité supérieures 21A des retours latéraux 21 de la joue 20.

Les parois 29 portées par la joue 20 ne gênent pas la mise en place du cache 30 car elles sont situées en retrait par rapport aux pattes 32 d'encliquetage dudit cache 30 sur le socle 10 de goulotte (voir figure 5).

Dans la position montée de l'embout, comme cela est représenté sur la figure 4, le cache 30 recouvre correctement le bord d'extrémité 55 coupé du couvercle de fermeture 50 de façon à empêcher toute introduction ultérieure d'un objet à l'intérieur du socle 10 de goulotte au niveau de la jonction entre le cache 30 et le couvercle de fermeture 50.

En outre, le jeu existant entre chaque plot 31 porté par le cache 30 et chaque orifice 25A correspondant qui le reçoit est très faible de telle sorte qu'en cas de chocs sur le cache 30 mis en place sur le socle 10 de goulotte, chaque plot 31 vient rapidement en butée contre le bord de chaque orifice 25A correspondant, en contenant la déformation des pattes 32 portant les dents 33 pour éviter que celles-ci sortent de leur coopération avec les retours 14 des ailes latérales 13 du socle 10 de goulotte.

La présente invention n'est nullement limitée au mode de réalisation décrit et représenté.

En particulier, selon une variante non représentée, on peut envisager que les moyens de fixation de la joue sur l'extrémité ouverte du socle de goulotte sont des moyens de fixation par encliquetage.

On peut également envisager que le cache soit rapporté sur la joue et non pas sur le socle, et comprend des moyens de montage à cet effet.

## Revendications

1. Embout de goulotte comprenant une joue (20) destinée à obturer une extrémité ouverte d'un socle (10) de goulotte, pourvue de moyens de fixation (27, 27A) sur ladite extrémité, et un cache (30) pour fermer un espace ouvert (60) situé entre ladite joue (20) et un bord d'extrémité (55) d'un couvercle de fermeture (50) dudit socle (10), **caractérisé en ce qu'**il comporte un bras flexible (40) s'étendant entre les faces intérieures (30A, 20A) du cache (30) et de la joue (20) pour établir un lien permanent entre ces derniers.

2. Embout de goulotte selon la revendication 1, **caractérisé en ce que** le bras flexible (40) vient de formation par moulage d'une matière plastique avec la joue (20) et le cache (30).

3. Embout de goulotte selon l'une des revendications 1 ou 2, **caractérisé en ce que** la joue (20) comporte des moyens de butée du bord d'extrémité (55) du couvercle de fermeture (50) formant un repère pour ajuster la coupe et le positionnement dudit bord d'extrémité (55) du couvercle de fermeture (50) par rapport à la joue (20).

4. Embout de goulotte selon l'une des revendications 1 à 3, **caractérisé en ce que** les moyens de fixation de la joue (20) sur ladite extrémité du socle (10) sont des moyens de fixation par vissage.

5. Embout de goulotte selon l'une des revendications 1 à 3, **caractérisé en ce que** les moyens de fixation de la joue (20) sur ladite extrémité du socle (10) sont des moyens de fixation par encliquetage.

6. Embout de goulotte selon la revendication 4, **caractérisé en ce que** lesdits moyens de fixation comprennent deux platines (23), percées chacune d'un orifice traversant (27A), portées par ladite joue (20) et destinées, lors de la mise en place de ladite joue (20) sur l'extrémité ouverte dudit socle (10), à se positionner chacune sur un retour (14) d'une aile latérale (13) dudit socle (10) de manière que ledit orifice traversant (27A) débouche dans une rainure (14A) formée à l'extrémité dudit retour (14), ledit orifice traversant (27A) étant destiné à accueillir une vis apte à venir en prise par vissage avec les parois de ladite rainure (14A).

7. Embout de goulotte selon la revendication 6, **caractérisé en ce que** chaque platine (23) présente un profil en escalier avec une plate-forme inférieure (27) comprenant l'orifice traversant (27A) et une plate-forme supérieure (28) dont la tranche (28A) forme des moyens de butée du bord d'extrémité (55) du couvercle de fermeture (50).

8. Embout de goulotte selon l'une des revendications 6 ou 7, **caractérisé en ce que** la joue (20) comporte, sur ses bords d'extrémités latéraux, des retours latéraux (21) destinés à s'appliquer sur les ailes latérales (13) du socle (10) de goulotte, chaque platine (23) étant solidaire d'un retour latéral (21) et ladite joue (20) porte, en regard de chaque retour latéral (21), une paroi (29), l'écartement prévu entre chaque paroi (29) et chaque retour latéral (21) correspondant à la largeur de chaque retour (14) de chaque aile latérale du socle (10) de goulotte de sorte que, lorsque la joue (20) est mise en place sur ladite extrémité dudit socle (10), chaque retour (14) de chaque aile latérale (13) dudit socle (10) est légèrement pincé entre un retour latéral (21) et une paroi (29) de ladite joue (20) qui forment un moyen de retenue temporaire de ladite joue (20) sur ledit socle (10).

9. Embout de goulotte selon l'une des revendications précédentes, **caractérisé en ce que** la joue (20) porte au moins un plot (25) percé d'un orifice (25A) destiné à recevoir un plot (31) porté par le cache (30).

10. Embout de goulotte selon l'une des revendications précédentes, **caractérisé en ce que** la joue (20) porte, sur sa face intérieure (20A), au moins une lamelle (26) s'étendant dans un plan perpendiculaire au plan de ladite joue (20) de sorte que la tranche de ladite lamelle (26) sert d'appui au couvercle de fermeture (50).

11. Embout de goulotte selon l'une des revendications précédentes, **caractérisé en ce que** la joue (20) comporte, sur son bord supérieur longitudinal, un retour (24) formant un support pour le cache (30).

12. Embout de goulotte selon l'une des revendications précédentes, **caractérisé en ce que** le cache (30) comprend des moyens de montage (32, 33) par encliquetage sur les retours (14) des ailes latérales (13) du socle (10) de goulotte.

13. Embout de goulotte selon la revendication 12, **caractérisé en ce que** lesdits moyens de montage comprennent deux pattes (32) pourvues à leur extrémité libre d'une dent (33), chaque dent (33) étant apte à s'encliqueter sous un desdits retours (14).

14. Embout de goulotte selon la revendication 13, **caractérisé en ce que** chaque retour (14) d'aile latérale (13) comprenant à son extrémité libre une nervure longitudinale (16) dirigée vers l'intérieur du socle (10) de goulotte, chaque dent (33) de chaque patte (32) portée par le cache (30) est apte à s'accrocher sur une partie d'extrémité libre (17) de cette nervure longitudinale (16).

15. Embout de goulotte selon l'une des revendications 1 à 11, **caractérisé en ce que** le cache comprend des moyens de montage sur la joue.

## Patentansprüche

1. Kabelkanalendstück mit einem Seitenteil (20) zum Verschließen eines offenen Endes eines Kabelkanalsockels (10), das mit Mitteln (27, 27A) zur Befestigung an diesem Ende versehen ist, und einer Abdeckung (30) zum Verschließen eines offenen Spalts (60), der sich zwischen dem Seitenteil (20) und einem äußeren Rand (55) eines Verschlussdeckels (50) des Sockels (10) befindet,
**dadurch gekennzeichnet, dass** es einen elastischen Arm (20) umfasst, der sich zwischen den Innenseiten (30A, 20A) der Abdeckung (30) und dem Seitenteil (20) erstreckt, um zwischen beiden eine dauerhafte Verbindung herzustellen.

2. Kabelkanalendstück nach Anspruch 1,
**dadurch gekennzeichnet, dass** der elastische Arm (40) mit dem Seitenteil (20) und der Abdeckung (30) aus einem Kunststoff einstückig angeformt ist.

3. Kabelkanalendstück nach einem der Ansprüche 1 oder 2,
**dadurch gekennzeichnet, dass** das Seitenteil (20) Anschlagmittel für den äußeren Rand (55) des Verschlussdeckels (50) aufweist, die eine Markierung bilden, um Zuschnitt und Lage des äußeren Rands (55) des Verschlussdeckels (50) bezüglich des Seitenteils (20) anzupassen.

4. Kabelkanalendstück nach einem der Ansprüche 1 bis 3,
**dadurch gekennzeichnet, dass** die Mittel zur Befestigung des Seitenteils (20) am Ende des Sockels (10) Mittel zur Schraubbefestigung sind.

5. Kabelkanalendstück nach einem der Ansprüche 1 bis 3,
**dadurch gekennzeichnet, dass** die Mittel zur Befestigung des Seitenteils (20) am Ende des Sockels (10) Mittel zur Rastbefestigung sind.

6. Kabelkanalendstück nach Anspruch 4,
**dadurch gekennzeichnet, dass** die Befestigungsmittel zwei jeweils mit einer durchgehenden Öffnung (27A) durchbohrte Platten (23) aufweisen, die von dem Seitenteil (20) getragen werden und sich beim Anbringen des Seitenteils (20) an dem offenen Ende des Sockels (10) jeweils auf einem Rücksprung (14) eines Seitenschenkels (13) des Sockels (10) solchermaßen anordnen, dass die durchgehende Öffnung (27A) in eine am Ende des Rücksprungs (14) gebildete Nut (14A) mündet, wobei die durchgehende Öffnung (27A) zur Aufnahme einer Schraube bestimmt ist, die mit den Wänden der Nut (14A) durch Verschraubung in Eingriff zu gelangen vermag.

7. Kabelkanalendstück nach Anspruch 6,
**dadurch gekennzeichnet, dass** jede Platte (23) ein treppenförmiges Profil aufweist mit einem die durchgehende Öffnung (27A) umfassenden unteren Absatz (27) und einem oberen Absatz (28), dessen Kante (28A) Anschlagmittel für den äußeren Rand (55) des Verschlussdeckels (50) bildet.

8. Kabelkanalendstück nach einem der Ansprüche 6 oder 7,
**dadurch gekennzeichnet, dass** das Seitenteil (20) auf seinen seitlichen Außenrändern seitliche Rücksprünge (21) aufweist, die dazu bestimmt sind, an die Seitenschenkel (13) des Kabelkanalsockels (10) angelegt zu werden, wobei jede Platte (23) mit einem seitlichen Rücksprung (21) fest verbunden ist, und das Seitenteil (20) jedem seitlichen Rücksprung zugewandt eine Wand (29) trägt, wobei der zwischen jeder Wand (29) und jedem seitlichen Rücksprung (21) vorgesehene Abstand der Breite eines jeden Rücksprungs (14) jedes Seitenschenkels des Kabelkanalsockels (10) entspricht, derart, dass beim Anbringen des Seitenteils (20) am Ende des Sockels (10) jeder Rücksprung (14) eines jeden Seitenschenkels (13) des Sockels (10) ein wenig zwischen einem seitlichen Rücksprung (21) und einer Wand (29) des Seitenteils (20) geklemmt wird, die ein vorübergehendes Haltemittel des Seitenteils (20) am Sockel (10) bilden.

9. Kabelkanalendstück nach einem der vorhergehenden Ansprüche,
**dadurch gekennzeichnet, dass** das Seitenteil (20) wenigstens einen mit einer Öffnung (25A) durchbohrten Stift (25) trägt, der zur Aufnahme eines von der Abdeckung (30) getragenen Stifts (31) bestimmt ist.

10. Kabelkanalendstück nach einem der vorhergehenden Ansprüche,
**dadurch gekennzeichnet, dass** das Seitenteil (20) auf seiner Innenseite (20A) wenigstens eine Zunge (26) trägt, die sich in einer Ebene lotrecht zur Ebene des Seitenteils (20) erstreckt, derart, dass die Kante der Zunge (26) dem Verschlussdeckel (50) als Auflage dient.

11. Kabelkanalendstück nach einem der vorhergehenden Ansprüche,
**dadurch gekennzeichnet, dass** das Seitenteil (20) auf seinem oberen Längsrand einen Rücksprung (24) aufweist, der für die Abdeckung (30) eine Auflage bildet.

12. Kabelkanalendstück nach einem der vorhergehenden Ansprüche,
**dadurch gekennzeichnet, dass** die Abdeckung (30) Montagemittel (32, 33) durch Einrasten auf den Rücksprüngen (14) der Seitenschenkel (13) des Kabelkanalsockels (10) aufweist.

13. Kabelkanalendstück nach Anspruch 12,
**dadurch gekennzeichnet, dass** die Montagemittel zwei Laschen (32) aufweisen, die an ihrem freien Ende mit einem Zahn (33) versehen sind, wobei jeder Zahn (33) unter einem der Rücksprünge (14) einzurasten vermag.

14. Kabelkanalendstück nach Anspruch 13,
**dadurch gekennzeichnet, dass** sich jeder Zahn (33) einer jeden von der Abdeckung (30) getragenen Lasche (32) an einem Teil des freien Endes (17) einer Längsrippe (16) einzuhaken vermag, die jeder Rücksprung (14) des Seitenschenkels (13) an seinem freien Ende nach innen in den Kabelkanalsockel (10) weisend aufweist.

15. Kabelkanalendstück nach einem der Ansprüche 1 bis 11,
**dadurch gekennzeichnet, dass** die Abdeckung Mittel zur Montage an dem Seitenteil aufweist.

## Claims

1. A duct end portion comprising an end plate (20) intended to close an open end of a duct base (10) and provided with fixing means (27, 27A) for fixing on said end, and a cover (30) for closing an open space (60) between said end plate (20) and an end edge (55) of a closure cover (50) of said base (10), **characterised in that** it comprises a flexible arm (40) extending between the inside faces (30A, 20A) of the cover (30) and the end plate (20) to establish a permanent link between those latter.

2. A duct end portion according to claim 1 **characterised in that** the flexible arm (40) is produced by moulding shaping of a plastic material with the end plate (20) and the cover (30).

3. A duct end portion according to one of claims 1 and 2 **characterised in that** the end plate (20) comprises abutment means for the end edge (55) of the closure cover (50) forming a reference for adjusting the cutting and positioning of said end edge (55) of the closure cover (50) with respect to the end plate (20).

4. A duct end portion according to one of claims 1 to 3 **characterised in that** the means for fixing the end plate (20) on said end of the base (10) are screw fixing means.

5. A duct end portion according to one of claims 1 to 3 **characterised in that** the means for fixing the end plate (20) on said end of the base (10) are latching fixing means.

6. A duct end portion according to claim 4 **characterised in that** said fixing means comprise two plate portions (23) which are each pierced with a through orifice (27A) and are carried by said end plate (20) and are intended when said end plate (20) is set in position on the open end of said base (10) to each be positioned on a flange (14) of a lateral limb (13) of said base (10) in such a way that said through orifice (27A) opens into a groove (14A) formed at the end of said flange (14), said through orifice (27A) being intended to receive a screw capable of coming into screwing engagement with the walls of said groove (14A).

7. A duct end portion according to claim 6 **characterised in that** each plate portion (23) is of a stepped profile with a lower platform (27) comprising the through orifice (27A) and an upper platform (28) whose edge face (28A) forms abutment means of the end edge (55) of the closure cover (50).

8. A duct end portion according to one of claims 6 and 7 **characterised in that** on its lateral end edges the end plate (20) comprises lateral flanges (21) intended to be applied to the lateral limbs (13) of the duct base (10), each plate portion (23) being fixed with respect to a lateral flange (21) and said end plate (20) carries a wall (29) in facing relationship with each lateral flange (21), the spacing between each wall (29) and each lateral flange (21) corresponding to the width of each flange (14) of each lateral limb of the duct base (10) in such a way that when the end plate (20) is set in place on said end of said base (10) each flange (24) of each lateral limb (13) of said base (10) is slightly gripped between a lateral flange (21) and a wall (29) of said end plate (20), which form a temporary retaining means for said end plate (20) on said base (10).

9. A duct end portion according to one of the preceding claims **characterised in that** the end plate (20) carries at least one stud (25) pierced with an orifice (25A) intended to receive a stud (31) carried by the cover (30).

10. A duct end portion according to one of the preceding claims **characterised in that** on its inner face (20A) the end plate (20) carries at least one tongue (26) extending in a plane perpendicular to the plane of said end plate (20) such that the end edge of said tongue (26) serves as a support for the closure cover (50).

11. A duct end portion according to one of the preceding claims **characterised in that** on its upper longitudinal edge the end plate (20) comprises a flange (24) forming a support for the cover (30).

12. A duct end portion according to one of the preceding claims **characterised in that** the cover (30) comprises means (32, 33) for latching mounting on the flanges (14) of the lateral limbs (13) of the duct base (10).

13. A duct end portion according to claim 12 **characterised in that** said mounting means comprise two lugs (32) provided at their free end with a tooth (33), each tooth (33) being latchable under one of said flanges (14).

14. A duct end portion according to claim 13 **characterised in that** each flange (14) of a lateral limb (13) comprising at its free end a longitudinal rib (16) directed inwardly of the duct base (10), each tooth (33) of each lug (32) carried by the cover is capable of coming into hooking engagement on a free end part (17) of said longitudinal rib (16).

15. A duct end portion according to one of claims 1 to 11 **characterised in that** the cover comprises means for mounting on the end plate.
